# EUROPEAN PATENT SPECIFICATION

(11) **EP 4 418 815 B1**
(45) Date of publication and mention of the grant of the patent: **29.04.2026**
(21) Application number: 22881238.4
(22) Date of filing: 21.09.2022
(51) Int. Cl.: H05B 1/02, F01N 3/08

(54) **EXHAUST GAS POSTTREATMENT DEVICE**
ABGASNACHBEHANDLUNGSVORRICHTUNG
DISPOSITIF DE POST-TRAITEMENT DE GAZ D'ÉCHAPPEMENT

(30) Priority: 13.10.2021 KR 20210136170
(43) Date of publication of application: 21.08.2024
(73) Proprietor: LS Automotive Technologies Co., Ltd., Anyang-si, Gyeonggi-do 14067 (KR)
(72) Inventor: NA, Jong-Sub, Uiwang-si, Gyeonggi-do 16087 (KR); KO, Won-il, Suwon-si, Gyeonggi-do 16385 (KR)
(74) Representative: Slingsby Partners LLP
(86) International application number: PCT/KR2022/014126
(87) International publication number: WO 2023/063609

(56) References cited:
- EP-A1- 3 582 584
- KR-A- 20120 019 442
- KR-A- 20150 060 977
- KR-A- 20150 119 317
- KR-A- 20200 094 675
- US-A- 5 746 053
- US-A1- 2004 129 065

## Description

### TECHNICAL FIELD

The present application claims priority to Korean Patent Application No. 10-2021-0136170 filed on October 13, 2021 in the Republic of Korea.

The present disclosure relates to an exhaust gas posttreatment device, and more specifically, to an exhaust gas posttreatment device that treats an exhaust gas generated from an internal combustion engine of a vehicle.

### BACKGROUND ART

When starting a vehicle immediately while it is stopped, a large amount of exhaust gas is emitted from the internal combustion engine of the vehicle. The exhaust gas contains harmful components. In order to remove harmful components of the exhaust gas, an exhaust gas posttreatment device is installed in the vehicle. The exhaust gas posttreatment device supplies a current to the resistor unit for a certain period of time according to the signal received from the control device of the vehicle to raise the temperature of the resistor unit to a high temperature of about 400°C or above, and afterwards, if the vehicle is started and exhaust gas is emitted from the internal combustion engine, the resistor unit burns the exhaust gas to prevent harmful components from being released into the atmosphere.

A representative exhaust gas posttreatment device is disclosed in Korean Patent Publication No. 10-2021-0018496. However, the exhaust gas posttreatment device disclosed in Korean Patent Publication No. 10-2021-0018496 has a structure in which a control unit is connected to each of a plurality of switches in order to transmit an external voltage to the resistor unit. In other words, as the number of switches increases, the number of control units increases accordingly. Therefore, various conditions cannot be monitored in an integrated manner, costs increase, and safety issues arise. Further post treatment devices are known from EP3582584A1 and US5746053A.

### DISCLOSURE

### Technical Problem

The present disclosure is designed to solve the problems of the related art, and therefore the present disclosure is directed to providing an exhaust gas posttreatment device that may control at least two switches and monitor the state of components using one control unit.

### Technical Solution

In one aspect of the present disclosure, there is provided an exhaust gas posttreatment device, comprising: a switching unit including at least two switches and configured to supply a current from a first power source to a resistor unit; a switching signal supplying unit configured to selectively control the operation of the switching unit by supplying a switching signal to the switching unit; a switching power supplying unit configured to supply a second power source to the switching signal supplying unit; a control unit configured to control the switching signal supplying unit to turn on/off; and an interface unit configured to activate the control unit according to a control signal received from a master control unit.

The exhaust gas posttreatment device may further comprise a temperature monitoring unit configured to monitor a temperature of the switching unit, and the control unit may control the switching signal supplying unit to turn on/off based on information received from the temperature monitoring unit.

The temperature monitoring unit may be a negative temperature coefficient thermistor, and the control unit may control the switching signal supplying unit to turn on/off based on a voltage according to a resistance value of the negative temperature coefficient thermistor.

The exhaust gas posttreatment device may further comprise a first current sensor located between the switching unit and the resistor unit and configured to detect a current value; and a current monitoring unit configured to transmit an off signal to the switching signal supplying unit when the current value is greater than or equal to a reference value.

The current monitoring unit may transmit an off signal to the control unit, and the control unit may inquire whether to turn on/off the switching unit to the master control unit according to the off signal received from the current monitoring unit, and transmit an on signal to the switching signal supplying unit when receiving an on signal from the master control unit.

The exhaust gas posttreatment device may further comprise a second current sensor installed on the ground corresponding to the first power source and configured to detect a current value, and the control unit may transmit an off signal to the switching signal supplying unit when the current value detected by the second current sensor does not match the current value detected by the first current sensor.

The exhaust gas posttreatment device may further comprise an input voltage monitoring unit configured to monitor voltage values of the first power source and the second power source and transmit the monitored voltage values to the control unit, and the control unit may transmit an off signal to the switching signal supplying unit when the monitored voltage value is outside a reference range.

The exhaust gas posttreatment device may further comprise an output voltage monitoring unit configured to monitor a voltage input to the resistor unit and a voltage output from the resistor unit and transmit the monitored voltages to the control unit, and the control unit may transmit an off signal to the switching signal supplying unit when the voltage value monitored by the output voltage monitoring unit is outside a reference range.

The interface unit may activate the control unit by adjusting a voltage of the second power source to a lower voltage and supplying the adjusted voltage of the second power source to the control unit.

### Advantageous Effects

The exhaust gas posttreatment device of the present disclosure may control a switching unit having at least two switches through one control unit and integrally monitor various states through an input voltage monitoring unit, a temperature monitoring unit, a current monitoring unit, and an output voltage monitoring unit, thereby reducing costs and enabling stable control.

### DESCRIPTION OF DRAWINGS

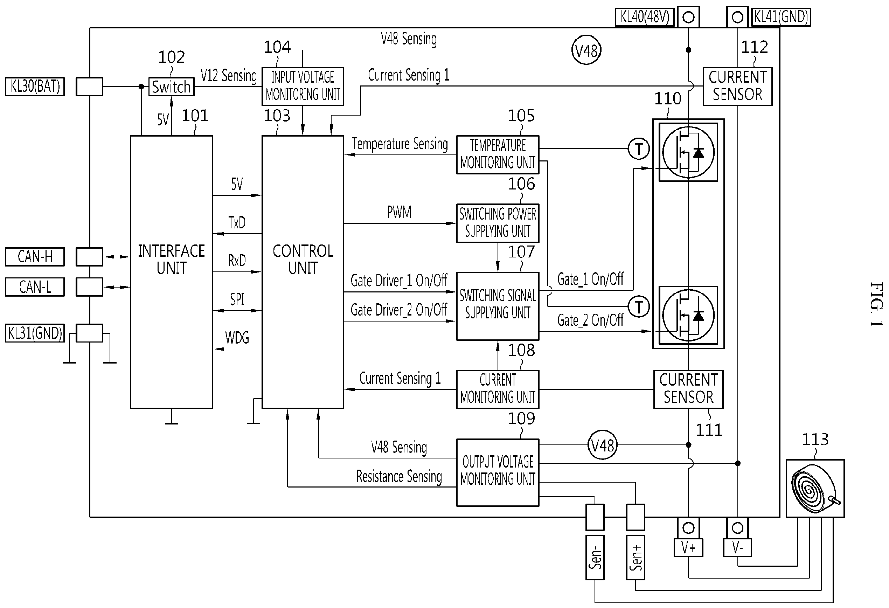

FIG. 1 is a diagram showing the configuration of an exhaust gas posttreatment device according to an embodiment of the present disclosure.

### BEST MODE

Hereinafter, embodiments of the present specification will be described in detail with reference to the attached drawings. Here, identical or similar components will be assigned the same reference numbers, and duplicate descriptions thereof will be omitted. The term "... unit" used in component names in the following description is given or used only considering the ease of preparing the specification, and does not have a distinct meaning or role in itself. Also, in describing the embodiments disclosed in this specification, if it is deemed that detailed descriptions of related known technologies may obscure the gist of the embodiments disclosed in this specification, the detailed descriptions will be omitted. In addition, the attached drawings are only intended to facilitate understanding of the embodiments disclosed in this specification, and the technical idea disclosed in this specification is not limited by the attached drawings, and it should be understood that all of modifications, equivalents or substitutes are included in the idea and scope of the present disclosure.

Singular expressions include plural expressions unless the context clearly dictates otherwise. In this application, terms such as "include" or "have" are intended to designate the presence of features, numbers, steps, operations, components, parts, or combinations thereof described in the specification, and it should be understood that these terms do not exclude in advance the possibility of the presence or addition of one or more other features, elements, numbers, steps, operations, components, parts, or combinations thereof.

In implementing the present disclosure, components may be subdivided for convenience of explanation, but these components may be implemented in one device or module, or one component may also be implemented in multiple devices or modules separately.

FIG. 1 is a diagram showing the configuration of an exhaust gas posttreatment device according to an embodiment of the present disclosure. Referring to FIG. 1, the exhaust gas posttreatment device according to this embodiment includes an interface unit 101, a power switch 102, a control unit 103, an input voltage monitoring unit 104, a temperature monitoring unit 105, a switching power supplying unit 106, a switching signal supplying unit 107, a current monitoring unit 108, an output voltage monitoring unit 109, a switching unit 110, current sensors 111, 112, and a resistor unit 113.

The interface unit 101 performs CAN (Controller Area Network) communication with a master control unit of a vehicle through a CAN terminal (CAN high (H)/low (L)). The interface unit 101 transmits a CAN signal (e.g., an on/off signal of the resistor unit 113) received from the master control unit to the control unit 103 (RxD) and transmits a response signal (TxD) received from the control unit 103 to the master control unit. Also, the interface unit 101 receives a power from a 12V second power source (KL 30) and supplies a voltage to components for operating the exhaust gas posttreatment device, including the control unit 103. In FIG. 1, the KL 31 GND terminal is the ground for the second power source (KL 30). Here, the second power source (KL 30) is a 12V battery of a mild hybrid vehicle, which may be a general lead acid battery, and supplies a voltage to the general electrical load of the vehicle.

The interface unit 101 controls the supply of 12V power to components that require a 12V power through the power switch 102. In other words, components that require a 12V power are directly connected to the second power source (KL 30) through the power switch 102 to receive the power. At this time, the interface unit 101 controls the power switch 102 to turn on/off to control the supply of 12V power. For components that require a 5V power, the interface unit 101 adjusts 12V voltage to 5V voltage through a regulator and supplies 5V power.

In one embodiment, when an on/off control signal is received through CAN communication from the master control unit, the interface unit 101 may turn on/off the entire exhaust gas posttreatment device by controlling the power (5V, 12V) supplied to the components to turn on/off. For example, when a sleep mode control signal is received from the master control unit, the interface unit 101 switches the 5V voltage to the off state and maintains the exhaust gas posttreatment device in an inactive state. In other words, the supply of 5V power to all components including the power switch 102 is blocked. When a wake-up control signal is received from the master control unit, the interface unit 101 switches the 5V voltage to the on state to activate the entire exhaust gas posttreatment device, including the power switch 102.

In addition, the interface unit 101 transmits and receives state information to and from the control unit 103 through a serial interface (e.g., SPI (serial peripheral interface)) and also performs a watchdog function to monitor the state of the control unit 103. The interface unit 101 may monitor the state of the control unit 103 using the watchdog function to determine whether the control unit 103 is malfunctioning, and then reset the control unit 103 or transmit the state information to the master control unit through CAN communication.

Preferably, the interface unit 101 may be implemented in the form of a system basis chip (SBC).

The control unit 103 is activated by receiving 5V power from the interface unit 101, and controls the switching unit 110 through the switching power supplying unit 106 and the switching signal supplying unit 107. Specifically, the control unit 103 transmits a control signal (e.g., pulse width modulation (PWM) signal) to the switching power supplying unit 106 so that the switching power supplying unit 106 supplies 12V power supplied from the second power source (KL 30) to the switching signal supplying unit 107. Accordingly, the switching signal supplying unit 107 supplies 12V power as a switching signal to the switching unit 110. The switching signal supplying unit 107 may be a gate driver.

The control unit 103 may control the switching unit 110 using the information received from the temperature monitoring unit 105 that monitors the temperature of the switching unit 110. When the temperature of the switching unit 110 becomes higher than or equal to a certain temperature, the control unit 103 warns the driver or sends an off signal to the switching signal supplying unit 107 to turn off the switching unit 110. When the temperature falls below the certain temperature, the control unit 103 may transmit an on signal to the switching signal supplying unit 107 to turn on the switching unit 110 again. For example, when the temperature reaches 130°C, the control unit 103 may notify it to the driver with a warning, and when the temperature rises to 145°C or above, the control unit 103 may transmit an off signal to the switching signal supplying unit 107 to turn off the switching unit 110. After that, if the temperature drops to 130°C or below, the control unit 103 may transmit an on signal to the switching signal supplying unit 107 to turn on the switching unit 110 again. That is, the control unit 103 may prevent the switching unit 110 from rising to a certain temperature or above.

In an embodiment, the temperature monitoring unit 105 may be a negative temperature coefficient (NTC) thermistor. The negative temperature coefficient thermistor has the characteristic that the resistance value decreases as the temperature rises. Thus, when the temperature of the switching unit 110 rises to a certain temperature or above, the resistance value of the temperature monitoring unit 105 decreases so that the ADC (Analog-Digital Converter) voltage applied to the control unit 103 increases. Therefore, the control unit 103 may measure the temperature of the switching unit 110 using the voltage received from the temperature monitoring unit 105.

The switching unit 110 turns on according to the switching signal received from the switching signal supplying unit 107 and supplies the current supplied from the first power source (KL 40) of 48V to the resistor unit 113. Here, the first power source (KL 40) is the 48V battery of the mild hybrid vehicle and is used to drive the motor generator of the vehicle. Preferably, the switching unit 110 includes at least two switches, and the switches are, for example, FETs (Field Effect Transistors). The reason that the switching unit 110 includes at least two switches is to prepare for the case where one switch is short-circuited. For example, if the switching unit 110 includes only one switch and the switch is short-circuited, a large amount of current flowing into the switch may flow to the resistor unit 113, which may cause a failure of the resistor unit 113. When the switching unit 110 includes two or more switches, even if one switch is short-circuited, the other switches may be controlled to turn on/off to prevent a large amount of current from flowing to the resistor unit 113.

When the switch included in the switching unit 110 is a FET, a 12V voltage is supplied as a switching signal from the switching signal supplying unit 107 to the gate of the FET. Due to the characteristics of the FET, if the gate-to-drain voltage and the gate-to-source voltage are identical, current does not flow. Therefore, when a 12V voltage is provided to the gate of the FET to make a difference between the gate-to-drain voltage and the gate-to-source voltage, the gate-to-drain voltage is 48V, but the gate-to-source voltage is 60V. Thus, a voltage difference occurs between the gate-to-drain and the gate-to-source, current may flow to the resistor unit 113.

In addition, the control unit 103 may control the switching unit 110 using the information received from the input voltage monitoring unit 104, the current monitoring unit 108, and the output voltage monitoring unit 109.

First, the input voltage monitoring unit 104 detects the voltage values of the first power source (KL 40) and the second power source (KL 30), which are input power sources, and transmits them to the control unit 103. When the voltage value of the first power source (KL 40) or the second power source (KL 30) is outside a reference range, the control unit 103 transmits an off signal to the switching signal supplying unit 107 to turn off the switching unit 110. At this time, the control unit 103 transmits the state information of the switching unit 110 to the master control unit using CAN communication and inquires whether the state of the switching unit 110 should be maintained in the off state or switched to the on state. When receiving the on signal of the switching unit 110 from the master control unit, the control unit 103 resets the switching signal supplying unit 107 and then transmits the on signal to the switching signal supplying unit 107 to turn on the switching unit 110.

The current monitoring unit 108 receives the current value detected by the current sensor 111 located between the switching unit 110 and the resistor unit 113 and transmits it to the control unit 103. If the received current value is greater than or equal to the reference value, the control unit 103 may transmit an off signal to the switching signal supplying unit 107 to turn off the switching unit 110. Alternatively, when an overcurrent value greater than or equal to the reference value is received from the current sensor 111, the current monitoring unit 108 transmits an off signal to the switching signal supplying unit 107 to urgently turn off the switching unit 110 without going through the control unit 103, and also transmits an off signal to control unit 103. Accordingly, the switching signal supplying unit 107 may urgently turn off the switching unit 110 by blocking the power supplied to the switching unit 110.

At this time, after turning off the switching unit 110, or when receiving an off signal from the current monitoring unit 108 as described above, the control unit 103 transmits the state information of the switching unit 110 to the master control unit using CAN communication, and inquire whether the state of the switching unit 110 should be maintained in the off state or switched to the on state. When receiving the on signal of the switching unit 110 from the master control unit, the control unit 103 resets the switching signal supplying unit 107 and then transmits the on signal of the switching unit 110 to the switching signal supplying unit 107 to turn on the switching unit 110.

In addition to the current sensor 111, another current sensor 112 is installed on the ground (KL 41) side corresponding to the first power source (KL 40). The current sensor 112 is used to check the normal operation of the loop connected from the first power source (KL 40) to the resistor unit 113 and the ground (KL 41). The control unit 103 receives the current value from the corresponding current sensor 112 and compares it with the current value detected by the current sensor 110. If they do not match (e.g., in the case of a short circuit to the ground (KL 41)), the control unit 103 transmits an off signal to the switching signal supplying unit 107 to turn off the switching unit 110.

Next, the output voltage monitoring unit 109 monitors the voltage input to the resistor unit 113 and the voltage output from the resistor unit 113, and transmits the monitored voltage values to the control unit 103. The voltage value input to resistor unit 113 is a voltage between the + voltage of the switching unit 110 and the ground (KL 41) corresponding to the first power source (KL 40). The control unit 103 transmits the voltage value input to the resistor unit 113 and the voltage value output from the resistor unit 113 to the master control unit. Also, when the voltage value input to the resistor unit 113 and the voltage value output from the resistor unit 113 are outside the reference range, the control unit 103 may transmit an off signal to the switching signal supplying unit 107 to turn off the switching unit 110.

At this time, after turning off the switching unit 110, the control unit 103 transmits the state information of the switching unit 110 to the master control unit using CAN communication, and inquires whether the state of the switching unit 110 should be maintained in the off state or switched to the on state. When receiving the on signal of the switching unit 110 from the master control unit, the control unit 103 resets the switching signal supplying unit 107 and then transmits an on signal to the switching signal supplying unit 107 to turn on the switching unit 110.

The exhaust gas posttreatment device according to the above embodiment may control the switching unit 110 including at least two switches through one control unit 103 and integrally monitor various states of the exhaust gas posttreatment device through the input voltage monitoring unit 104, the temperature monitoring unit 105, the current monitoring unit 108, and the output voltage monitoring unit 109, so it is possible to reduce costs and enable stable control.

While this specification contains many features, such features should not be construed as limiting the scope of the present disclosure or the scope of the appended claims.

## Claims

1. An exhaust gas posttreatment device, comprising:
a switching unit (110) including at least two switches and configured to supply a current from a first power source (KL 40) to a resistor unit (113);
a switching signal supplying unit (107) configured to selectively control the operation of the switching unit by supplying a switching signal to the switching unit;
a switching power supplying unit (106) configured to supply a second power source (KL 30) to the switching signal supplying unit;
a control unit (103) configured to control the switching signal supplying unit to turn on/off; and
an interface unit (101) configured to activate the control unit according to a control signal received from a master control unit.

2. The exhaust gas posttreatment device according to claim 1, further comprising:
a temperature monitoring unit (105) configured to monitor a temperature of the switching unit,
wherein the control unit controls the switching signal supplying unit to turn on/off based on information received from the temperature monitoring unit.

3. The exhaust gas posttreatment device according to claim 2,
wherein the temperature monitoring unit is a negative temperature coefficient thermistor, and
wherein the control unit controls the switching signal supplying unit to turn on/off based on a voltage according to a resistance value of the negative temperature coefficient thermistor.

4. The exhaust gas posttreatment device according to claim 1, further comprising:
a first current sensor (111) located between the switching unit and the resistor unit and configured to detect a current value; and
a current monitoring unit (108) configured to transmit an off signal to the switching signal supplying unit when the current value is greater than or equal to a reference value.

5. The exhaust gas posttreatment device according to claim 4,
wherein the current monitoring unit transmits an off signal to the control unit, and
wherein the control unit inquires whether to turn on/off the switching unit to the master control unit according to the off signal received from the current monitoring unit, and transmits an on signal to the switching signal supplying unit when receiving an on signal from the master control unit.

6. The exhaust gas posttreatment device according to claim 4, further comprising:
a second current sensor (112) installed on the ground corresponding to the first power source and configured to detect a current value,
wherein the control unit transmits an off signal to the switching signal supplying unit when the current value detected by the second current sensor does not match the current value detected by the first current sensor.

7. The exhaust gas posttreatment device according to claim 1, further comprising:
an input voltage monitoring unit (104) configured to monitor voltage values of the first power source and the second power source and transmit the monitored voltage values to the control unit,
wherein the control unit transmits an off signal to the switching signal supplying unit when the monitored voltage value is outside a reference range.

8. The exhaust gas posttreatment device according to claim 1, further comprising:
an output voltage monitoring unit (109) configured to monitor a voltage input to the resistor unit and a voltage output from the resistor unit and transmit the monitored voltage values to the control unit,
wherein the control unit transmits an off signal to the switching signal supplying unit when the voltage value monitored by the output voltage monitoring unit is outside a reference range.

9. The exhaust gas posttreatment device according to claim 1,
wherein the interface unit activates the control unit by adjusting a voltage of the second power source to a lower voltage and supplying the adjusted voltage of the second power source to the control unit.

## Patentansprüche

1. Abgasnachbehandlungsvorrichtung, umfassend:
eine Schalteinheit (100), die mindestens zwei Schalter beinhaltet und dazu konfiguriert ist, einer Widerstandseinheit (113) einen Strom aus einer ersten Energiequelle (KL40) zuzuführen;
eine Schaltsignal-Zuführungseinheit (107), die dazu konfiguriert ist, den Betrieb der Schalteinheit durch Zuführen eines Schaltsignals an die Schalteinheit selektiv zu steuern;
eine Schaltenergie-Zuführungseinheit (106), die dazu konfiguriert ist, der Schaltsignal-Zuführungseinheit eine zweite Energiequelle (KL30) zuzuführen;
eine Steuereinheit (103), die dazu konfiguriert ist, das Ein-/Ausschalten der Schaltsignal-Zuführungseinheit zu steuern, und
eine Schnittstelleneinheit (101), die dazu konfiguriert ist, die Steuereinheit gemäß einem aus einer Hauptsteuereinheit empfangenen Steuersignal zu aktivieren.

2. Abgasnachbehandlungsvorrichtung gemäß Anspruch 1, ferner umfassend:
eine Temperaturüberwachungseinheit (105), die dazu konfiguriert ist, eine Temperatur der Schalteinheit zu überwachen,
wobei die Steuereinheit das Ein-/Ausschalten der Schaltsignal-Zuführungseinheit basierend auf Informationen steuert, die aus der Temperaturüberwachungseinheit empfangen werden.

3. Abgasnachbehandlungsvorrichtung gemäß Anspruch 2,
wobei die Temperaturüberwachungseinheit ein Thermistor mit negativem Temperaturkoeffizienten ist, und
wobei die Steuereinheit das Ein-/Ausschalten der Schaltsignal-Zuführungseinheit basierend auf einer Spannung gemäß einem Widerstandswert des Thermistors mit negativem Temperaturkoeffizienten steuert.

4. Abgasnachbehandlungsvorrichtung gemäß Anspruch 1, ferner umfassend:
einen ersten Stromsensor (111), der sich zwischen der Schalteinheit und der Widerstandseinheit befindet und dazu konfiguriert ist, einen Stromwert zu detektieren; und
eine Stromüberwachungseinheit (108), die dazu konfiguriert ist, ein Aus-Signal an die Schaltsignal-Zuführungseinheit zu übertragen, wenn der Stromwert größer als ein oder gleich einem Referenzwert ist.

5. Abgasnachbehandlungsvorrichtung gemäß Anspruch 4,
wobei die Stromüberwachungseinheit ein Aus-Signal an die Steuereinheit überträgt und
wobei die Steuereinheit gemäß dem aus der Stromüberwachungseinheit empfangenen Aus-Signal anfragt, ob die zu der Hauptsteuerheit führende Schalteinheit ein-/auszuschalten ist, und ein Ein-Signal an die Schaltsignal-Zuführungseinheit überträgt, wenn ein Ein-Signal aus der Master-Steuereinheit empfangen wird.

6. Abgasnachbehandlungsvorrichtung gemäß Anspruch 4, ferner umfassend:
einen zweiten Stromsensor (112), der auf der Masse entsprechend der ersten Energiequelle installiert und dazu konfiguriert ist, einen Stromwert zu detektieren,
wobei die Steuereinheit ein Aus-Signal an die Schaltsignal-Zuführungseinheit überträgt, wenn der von dem zweiten Stromsensor detektierte Stromwert nicht mit dem von dem ersten Stromsensor detektierten Stromwert übereinstimmt.

7. Abgasnachbehandlungsvorrichtung gemäß Anspruch 1, ferner umfassend:
eine Eingangsspannungs-Überwachungseinheit (104), die dazu konfiguriert ist, Spannungswerte der ersten Energiequelle und der zweiten Energiequelle zu überwachen und die überwachten Spannungswerte an die Steuereinheit zu übertragen,
wobei die Steuereinheit ein Aus-Signal an die Schaltsignal-Zuführungseinheit überträgt, wenn der überwachte Spannungswert außerhalb eines Referenzbereichs liegt.

8. Abgasnachbehandlungsvorrichtung gemäß Anspruch 1, ferner umfassend:
eine Ausgangsspannungs-Überwachungseinheit (109), die dazu konfiguriert ist, einen Spannungseingang in die Widerstandseinheit und einen Spannungsausgang aus der Widerstandseinheit zu überwachen und die überwachten Spannungswerte an die Steuereinheit zu übertragen,
wobei die Steuereinheit ein Aus-Signal an die Schaltsignal-Zuführungseinheit überträgt, wenn der von der Ausgangsspannungs-Überwachungseinheit überwachte Spannungswert außerhalb eines Referenzbereichs liegt.

9. Abgasnachbehandlungsvorrichtung gemäß Anspruch 1,
wobei die Schnittstelleneinheit die Steuereinheit aktiviert, indem eine Spannung der zweiten Energiequelle auf eine niedrigere Spannung eingestellt und die eingestellte Spannung der zweiten Energiequelle an die Steuereinheit zugeführt wird.

## Revendications

1. Dispositif de post-traitement de gaz d'échappement, comprenant : une unité de commutation (100)
comprenant au moins deux commutateurs et configurée pour fournir un courant à partir d'une première source d'alimentation (KL40) à une unité de résistance (113) ;
une unité de fourniture de signal de commutation (107) configurée pour commander sélectivement le fonctionnement de l'unité de commutation en fournissant un signal de commutation à l'unité de commutation ;
une unité d'alimentation de commutation (106) configurée pour fournir une seconde source d'alimentation (KL30) à l'unité de fourniture de signal de commutation ;
une unité de commande (103) configurée pour commander l'unité de fourniture de signal de commutation pour la mise en marche/arrêt et
une unité d'interface (101)
configurée pour activer l'unité de commande selon un signal de commande reçu en provenance d'une unité de commande maître.

2. Dispositif de post-traitement de gaz d'échappement selon la revendication 1, comprenant en outre :
une unité de surveillance de température (105) configurée pour surveiller une température de l'unité de commutation,
ladite unité de commande commandant l'unité de fourniture de signal de commutation pour la mise en marche/arrêt sur la base d'informations reçues en provenance de l'unité de surveillance de température.

3. Dispositif de post-traitement de gaz d'échappement selon la revendication 2,
ladite unité de surveillance de température étant une thermistance à coefficient de température négatif, et
ladite unité de commande commandant l'unité de fourniture de signal de commutation pour la mise en marche/arrêt sur la base d'une tension selon une valeur de résistance de la thermistance à coefficient de température négatif.

4. Dispositif de post-traitement de gaz d'échappement selon la revendication 1, comprenant en outre :
un premier capteur de courant (111)
situé entre l'unité de commutation et l'unité de résistance et configuré pour détecter une valeur de courant ; et
une unité de surveillance de courant (108) configurée pour transmettre un signal d'arrêt à l'unité de fourniture de signal de commutation lorsque la valeur de courant est supérieure ou égale à une valeur de référence.

5. Dispositif de post-traitement de gaz d'échappement selon la revendication 4,
ladite unité de surveillance de courant transmettant un signal d'arrêt à l'unité de commande, et
ladite unité de commande demandant si l'unité de commutation doit être mise en marche/arrêt à l'unité de commande maître selon le signal d'arrêt reçu en provenance de l'unité de surveillance de courant, et transmettant un signal de marche à l'unité de fourniture de signal de commutation lors de la réception d'un signal de marche en provenance de l'unité de commande maître.

6. Dispositif de post-traitement de gaz d'échappement selon la revendication 4, comprenant en outre :
un second capteur de courant (112)
installé au sol correspondant à la première source d'alimentation et configuré pour détecter une valeur de courant,
ladite unité de commande transmettant un signal d'arrêt à l'unité de fourniture de signal de commutation lorsque la valeur de courant détectée par le second capteur de courant ne correspond pas à la valeur de courant détectée par le premier capteur de courant.

7. Dispositif de post-traitement de gaz d'échappement selon la revendication 1, comprenant en outre :
une unité de surveillance de tension d'entrée (104) configurée pour surveiller les valeurs de tension de la première source d'alimentation et de la seconde source d'alimentation et transmettre les valeurs de tension surveillées à l'unité de commande,
ladite unité de commande transmettant un signal d'arrêt à l'unité de fourniture de signal de commutation lorsque la valeur de tension surveillée est en dehors d'une plage de référence.

8. Dispositif de post-traitement de gaz d'échappement selon la revendication 1, comprenant en outre :
une unité de surveillance de tension de sortie (109) configurée pour surveiller une entrée de tension à l'unité de résistance et une sortie de tension provenant de l'unité de résistance et transmettre les valeurs de tension surveillées à l'unité de commande,
ladite unité de commande transmettant un signal d'arrêt à l'unité de fourniture de signal de commutation lorsque la valeur de tension surveillée par l'unité de surveillance de tension de sortie est en dehors d'une plage de référence.

9. Dispositif de post-traitement de gaz d'échappement selon la revendication 1,
ladite unité d'interface activant l'unité de commande en réglant une tension de la seconde source d'alimentation à une tension inférieure et en fournissant la tension réglée de la seconde source d'alimentation à l'unité de commande.
